# EUROPÄISCHE PATENTANMELDUNG

(11) **EP 4 831 055 A1**
(43) Veröffentlichungstag der Anmeldung: **28.10.2026**
(21) Anmeldenummer: 26167028.5
(22) Anmeldetag: 24.03.2026
(51) Int. Cl.: B64C 1/12, B64C 1/06

(54) **VERBINDUNGSANORDNUNG ZUM VERBINDEN VON STRUKTURTEILEN EINES LUFTFAHRZEUGS**

(30) Priorität: 25.04.2025 DE 102025001380
(71) Anmelder: Airbus Operations GmbH, 21129 Hamburg (DE)
(72) Erfinder: LEICHSNER, Florian, 21129 Hamburg (DE); DIETRICH, Steffen, 21129 Hamburg (DE)
(74) Vertreter: LKGLOBAL Partnerschaftsgesellschaft mbB

(57) **Zusammenfassung**

Die vorliegende Erfindung betrifft eine Verbindungsanordnung (2) zum Verbinden von Strukturteilen eines Luftfahrzeugs, wobei die Verbindungsanordnung (2) ein erstes Strukturteil (10) mit einem ersten Flanschsegment (11); ein zweites Strukturteil (12) mit einem zweiten Flanschsegment (13); und eine Verbindungsvorrichtung (24) zum Verbinden des ersten Flanschsegments (11) und des zweiten Flanschsegments (13) aufweist. Das erste Strukturteil (10) und das zweite Strukturteil (12) bilden eine Außenfläche des Luftfahrzeugs. Das erste Flanschsegment (11) und das zweite Flanschsegment (13) liegen in einem verbundenen Zustand entlang einer Verbindungsebene (14) aneinander an. Das erste Flanschsegment (11) und das zweite Flanschsegment (13) weisen jeweils mindestens eine Durchgangsöffnung (16) auf, die zueinander ausgerichtet sind. In verbundenem Zustand ragt ein Verbindungselement (28) der Verbindungsvorrichtung (24) in einer Verbindungsrichtung (18) durch die Durchgangsöffnungen (16), um das erste Flanschsegment (11) und das zweite Flanschsegment (13) miteinander zu verbinden, wobei die Verbindungsrichtung (18) quer zur Verbindungsebene (14) verläuft und wobei die Verbindungsebene (14) zur Außenfläche derart geneigt angeordnet ist, dass die Verbindungsrichtung (18) schräg zur Außenfläche verläuft und diese schneidet.

## Beschreibung

### GEBIET DER ERFINDUNG

Die vorliegende Erfindung befasst sich mit dem Verbinden von Strukturteilen und befasst sich insbesondere mit einer Verbindungsanordnung zum Verbinden von Strukturteilen eines Luftfahrzeugs, mit einem Luftfahrzeug und mit einem Verfahren zum Verbinden von Strukturteilen eines Luftfahrzeugs.

### HINTERGRUND DER ERFINDUNG

In Luftfahrzeugen ist beispielsweise eine Rumpfkonstruktion vorgesehen, die aus mehreren Sektionen besteht. Zur Wartung oder Inspektion von im Rumpfinneren liegenden Teilen, wie zum Beispiel Tanks, kann es nötig sein, einzelne Sektionen der Rumpfstruktur zu entfernen, um eine Öffnung bereitzustellen. Die entfernten Sektionen werden danach zum Verschließen der Öffnung wieder eingesetzt und miteinander verbunden. Es hat sich jedoch gezeigt, dass das Entfernen und Wiedereinsetzen von größeren Strukturteilen wie Rumpfsektionen die Integrität der Struktur beeinträchtigen kann.

### ZUSAMMENFASSUNG DER ERFINDUNG

Die Aufgabe der vorliegenden Erfindung besteht daher darin, eine verbesserte Verbindungsanordnung zum Verbinden von Strukturteilen eines Luftfahrzeugs bereitzustellen. Diese Aufgabe wird durch den Gegenstand der unabhängigen Ansprüche gelöst. Weitere Beispiele sind in den abhängigen Ansprüchen angegeben. Die im Folgenden beschriebenen Aspekte gelten auch für das Luftfahrzeug und für das Verfahren zum Verbinden von Strukturteilen eines Luftfahrzeugs.

Gemäß der Erfindung ist eine Verbindungsanordnung zum Verbinden von Strukturteilen eines Luftfahrzeugs vorgesehen. Die Verbindungsanordnung weist ein erstes Strukturteil mit einem ersten Flanschsegment, ein zweites Strukturteil mit einem zweiten Flanschsegment und eine Verbindungsvorrichtung zum Verbinden des ersten Flanschsegments und des zweiten Flanschsegments auf. Das erste Strukturteil und das zweite Strukturteil bilden eine Außenfläche des Luftfahrzeugs. Das erste Flanschsegment und das zweite Flanschsegment liegen in einem verbundenen Zustand entlang einer Verbindungsebene aneinander an und weisen jeweils mindestens eine Durchgangsöffnung auf, wobei die Durchgangsöffnungen zueinander ausgerichtet sind. In verbundenem Zustand ragt ein Verbindungselement der Verbindungsvorrichtung in einer Verbindungsrichtung durch die Durchgangsöffnungen, um das erste Flanschsegment und das zweite Flanschsegment miteinander zu verbinden, wobei die Verbindungsrichtung quer zur Verbindungsebene verläuft und wobei die Verbindungsebene zur Außenfläche derart geneigt angeordnet ist, dass die Verbindungsrichtung schräg zur Außenfläche verläuft und diese schneidet.

Der Begriff "Verbindungsanordnung" bezieht sich auf eine Anordnung, die ein strukturelles Verbindungsprinzip darstellt, mit dem Strukturteile eines Luftfahrzeugs über ein Flanschprinzip miteinander verbunden werden können. Die Verbindungsanordnung erlaubt eine wieder lösbare Montage von größeren Flugzeugstrukturteilen, und kann auch als Verbindungsvorrichtung oder als ein Montageprinzip bezeichnet werden.

In einem Aspekt dient die Verbindungsanordnung dazu, Strukturteile eines Luftfahrzeugs reversibel zu verbinden, d.h. wieder lösbar zu verbinden. Die Verbindungsanordnung kann zur Montage und zur Demontage von Strukturteilen eines Luftfahrzeugs dienen, beispielsweise wenn Teile einer Flugzeugzelle vorübergehend entfernt und später wieder ordnungsgemäß eingebaut werden sollen.

Der Begriff "Strukturteil" bezieht sich auf eine Sektion einer Flugzeugstruktur, wie zum Beispiel Teile des Rumpfes, der Tragflächen oder der Leitwerke. Die Strukturteile weisen jeweils Flanschsegmente auf, über welche sie miteinander verbunden werden können.

Der Begriff "Flanschsegment" bezieht sich auf einen Flansch, der an dem Strukturteil angebracht ist. Das Flanschsegment umfasst mindestens eine Durchgangsöffnung und bildet eine ebene Fläche, die an eine zweite ebene Fläche eines zweiten Strukturteil-Flanschsegments angelegt werden kann, so dass zwei Strukturteile über die Flanschsegmente miteinander verbunden werden können.

Der Begriff "Durchgangsöffnung" bezieht sich auf eine Öffnung im Flanschsegment, wie zum Beispiel eine Bohrung, die zu einer Durchgangsöffnung eines zweiten Flanschsegments eines zweiten Strukturbauteils hin ausgerichtet ist.

Das Flanschprinzip ermöglicht ein Öffnen und Wiederverschließen einer Baugruppe bzw. einer Flugzeugzelle ohne Beschädigung der Flugzeugstruktur.

Der Begriff "Verbindungsebene" bezieht sich auf die ebenen Flächen der Flanschsegmente, die in einem verbundenen Zustand der Strukturteile aneinander anliegen. Die Verbindungsebene kann auch als Kontaktfläche bezeichnet werden.

Der Begriff "Verbindungsvorrichtung" bezieht sich auf die Teile, die für eine feste Verbindung der Strukturteile benötigt werden, und umfasst zum Beispiel Verbindungselemente wie Schrauben, Bolzen, Buchsen und Muttern. Ein "Verbindungselement" ragt in verbundenem Zustand durch die Durchgangsöffnungen der Flanschsegmente.

Der Begriff "Verbindungsrichtung" bezieht sich auf eine gedachte Linie zwischen den beiden Durchgangsöffnungen der Strukturteil-Flanschsegmente, entlang derer sich das Verbindungselement zum Verbinden erstreckt, und die quer zur Verbindungsebene verläuft.

Der Begriff "quer" bedeutet "nicht parallel", sondern zum Beispiel seitlich oder im rechten Winkel dazu. Mit anderen Worten bedeutet "die Verbindungsrichtung verläuft quer zur Verbindungsebene", dass die gedachte Linie der Verbindungsrichtung die Verbindungsebene in jedem Fall kreuzt und auch senkrecht zu ihr stehen kann.

Der Begriff "schräg" bedeutet "nicht parallel" und "nicht senkrecht". "Die Verbindungsrichtung verläuft schräg zur Außenfläche" bedeutet, dass die gedachte Linie der Verbindungsrichtung die Außenfläche in jedem Fall kreuzt.

In einem Beispiel verläuft die Verbindungsrichtung ebenfalls quer zur Außenfläche, so dass die gedachte Linie zwischen den beiden Durchgangsöffnungen auch senkrecht zur Außenfläche verlaufen kann.

Die Verbindungsebene ist zur Außenfläche derart geneigt angeordnet, dass die Verbindungsrichtung nicht parallel zur Außenfläche verlaufen kann, sondern diese schneidet.

Der Begriff "geneigt" beschreibt eine räumliche Ausrichtung, die nicht senkrecht und nicht waagrecht ist, sondern in einem Winkel zu der Referenzfläche steht, und somit schräg oder abgewinkelt ist.

Der Begriff "Außenfläche" bezieht sich auf eine Außenfläche des Luftfahrzeugs, d.h. einen Teil der Außenfläche des Luftfahrzeugs. Die Außenflächen der Strukturteile können die Basis bilden für eine durchgehende Außenfläche des Luftfahrzeugs, zum Beispiel eine Außenfläche des Rumpfes. Wenn die Außenfläche noch Aussparungen oder Öffnungen aufweist, bezieht sich der Begriff Außenfläche auf eine als durchgehend gedachte Außenfläche.

Als Option umfasst die Außenfläche eine Abschlussplatte, um eine glatte aerodynamische Oberfläche herzustellen, zum Beispiel eine kleine, nicht tragende Abschlussplatte.

Der Vorteil der Erfindung besteht darin, eine selbstausrichtende Verbindung von Strukturteilen bereitzustellen, die den Bedarf an Vorrichtungen und Werkzeugen während der industriellen Fertigung und insbesondere für das Öffnen und Schließen dieser Verbindung während des Betriebs verringert. Die Schrägstellung der Flansche der Strukturteile ermöglicht eine kompaktere Lösung, die zu einer deutlich leichteren Konstruktion führt, da keine großen Taschen wie bei einer herkömmlichen Zugbolzenverbindung erforderlich sind. Der Zugang zum Werkzeug wird im Vergleich zu einer senkrechten Flanschposition verbessert. Die Schrägstellung der Flansche und damit der Verbindungsebene der Strukturteil-Flansche ermöglicht außerdem die globale Ausrichtung der Profile.

Gemäß einem Beispiel verläuft die Verbindungsrichtung schräg zu einer von der Außenfläche gebildeten Mantellinie und schneidet die Mantellinie.

Der Begriff "Mantellinie" bezieht sich auf eine Linie, die an der Außenfläche entlangläuft. Beispielsweise ist die Mantellinie eine Gerade, wenn die Außenfläche eine ebene Fläche ist.

Gemäß einem Beispiel verläuft die Verbindungsrichtung schräg zu einer Tangente einer von der Außenfläche gebildeten gekrümmten Mantellinie und schneidet die Tangente.

Der Begriff "Tangente" bezieht sich auf eine Gerade, die die gekrümmte Mantellinie der Außenfläche in genau einem Punkt berührt, ohne sie zu schneiden.

Gemäß einem Beispiel verläuft die Verbindungsrichtung senkrecht zur Verbindungsebene.

Der Begriff "senkrecht" in "die Verbindungsrichtung verläuft senkrecht zur Verbindungsebene" bezieht sich darauf, dass die gedachte Linie zwischen den beiden Durchgangsöffnungen der Strukturteil-Flanschsegmente in einem rechten Winkel (d.h. 90 Grad) zur Verbindungsebene steht.

Gemäß einem Beispiel bilden die Durchgangsöffnungen eine konische Buchse.

Der Begriff "konische Buchse" bezieht sich auf ein zylinderförmiges Verbindungselement mit einer konisch (also kegelförmig) geformten Innen- oder Außenfläche.

Gemäß einem Beispiel ist das mindestens eine Verbindungselement ein konischer Bolzen.

Der Begriff "konischer Bolzen" bezieht sich auf einen Bolzen, beispielsweise einen zylindrischen Stift oder Stab, der sich in Längsrichtung verjüngt - also nicht zylindrisch, sondern kegelförmig ist. Ein konischer Bolzen kann sich auch auf eine konische Schraube beziehen.

Das Verwenden von konischen Bolzen zusammen mit konischen Buchsen ermöglicht ein enges Spiel, was für die Übertragung der Scherbelastung an der Schnittstelle erforderlich sein kann. Zwei Bauteile können dadurch zentriert, fest und spielfrei miteinander verbunden werden.

Durch konische Bolzen und Buchsen kann eine lokale Ausrichtung der Strukturteile erreicht werden.

Gemäß einem Beispiel umfasst die Verbindungsanordnung zusätzlich mindestens einen Treibstift.

Der Begriff "Treibstift" bezieht sich auf einen Stift, der zur Lagefixierung der Flansche dient.

Die Schrägstellung der Kontaktfläche ermöglicht eine globale Ausrichtung der Profile. Durch die Verwendung zusätzlicher Treibstifte wird das Strukturteil in die richtige Position gebracht und es kann eine noch bessere globale Selbstausrichtung auf Bauteilebene erzielt werden.

Die globale Ausrichtung der Strukturteile wird also durch die geneigte Kontaktfläche der Flansche und zusätzliche Treibstifte erreicht, während die lokale Ausrichtung zum Beispiel durch konische Bolzen erzielt werden kann.

Gemäß einem Beispiel umfasst die Verbindungsvorrichtung ferner mindestens eine Zylindermutter.

Der Begriff "Zylindermutter" bezieht sich auf ein zylinderförmiges Verbindungselement mit Innengewinde, das in Kombination mit einem anderen Verbindungselement, wie zum Beispiel einem Bolzen, verwendet wird, um die Flanschsegmente der Strukturteile zu verspannen und miteinander zu verbinden.

In einem Beispiel ist eine Zylindermutter nur auf einer Seite der Verbindungsebene angeordnet.

Die Verwendung von Zylindermuttern an einer Seite der Verbindung ermöglicht den Zugang von nur einer Seite, was die Montage auch in komplexen Bereichen ermöglicht, und die Raumnutzung verbessert.

In einer Variante umfasst die Verbindungsvorrichtung eine Sechskant- oder Vierkantmutter oder eine andere geeignete Art von Mutter.

Gemäß einem Beispiel sind die Strukturteile Strukturteile einer Rumpfsektion des Luftfahrzeugs.

Der Begriff "Rumpfsektion" bezieht sich auf einen Teilbereich des Rumpfes eines Luftfahrzeugs.

Gemäß der Erfindung ist auch ein Luftfahrzeug vorgesehen. Das Luftfahrzeug weist mindestens einen Rumpf, ein Fahrwerk, Tragflächen und Leitwerke auf. Mindestens zwei Strukturteile des Luftfahrzeugs sind mit der Verbindungsanordnung nach einem der vorhergehenden Beispiele verbunden.

Strukturteile können beispielsweise Strukturteile des Rumpfes, der Tragflächen oder der Leitwerke sein.

Der Begriff "Luftfahrzeug" bezieht sich auf ein Gerät, das in der Luft fliegen oder sich durch die Luft bewegen kann. Das Luftfahrzeug kann bemannt oder unbemannt, motorisiert oder nicht motorisiert sein.

Der Begriff "Rumpf" bezieht sich auf den zentralen Teil des Luftfahrzeugs, an dem Fahrwerk, Leitwerk und Tragflächen und weitere Komponenten oder Systeme befestigt sind.

Gemäß der Erfindung ist auch ein Verfahren zum Verbinden von Strukturteilen eines Luftfahrzeugs vorgesehen. Das Verfahren weist die folgenden Schritte auf: Bereitstellen eines ersten Strukturteils mit einem ersten Flanschsegment; Bereitstellen eines zweiten Strukturteils mit einem zweiten Flanschsegment; Bereitstellen einer Verbindungsvorrichtung zum Verbinden des ersten Flanschsegments und des zweiten Flanschsegments. Wobei das erste Strukturteil und das zweite Strukturteil eine Außenfläche des Luftfahrzeugs bilden. Das erste Flanschsegment und das zweite Flanschsegment liegen in einem verbundenen Zustand entlang einer Verbindungsebene aneinander an. Das erste Flanschsegment und das zweite Flanschsegment weisen jeweils mindestens eine Durchgangsöffnung auf, die zueinander ausgerichtet sind. In verbundenem Zustand ragt ein Verbindungselement der Verbindungsvorrichtung in einer Verbindungsrichtung durch die Durchgangsöffnungen, um das erste Flanschsegment und das zweite Flanschsegment miteinander zu verbinden, wobei die Verbindungsrichtung quer zur Verbindungsebene verläuft und wobei die Verbindungsebene zur Außenfläche derart geneigt angeordnet ist, dass die Verbindungsrichtung schräg zur Außenfläche verläuft und diese schneidet.

Gemäß einem Aspekt wird eine Verbindungsanordnung zum lösbaren Verbinden von Strukturteilen eines Luftfahrzeugs zur Verfügung gestellt. Die Verbindungsanordnung umfasst ein erstes Strukturteil, ein zweites Strukturteil und mindestens ein Verbindungselement. Die Strukturteile weisen jeweils ein schräggestelltes Flanschsegment mit einer Kontaktfläche auf, an welcher die Strukturteile mit dem mindestens einen Verbindungselement miteinander verbunden werden können. Im verbundenen Zustand bilden die Strukturteile einen Teil einer Außenfläche des Luftfahrzeugs. Eine Senkrechte zu der Kontaktfläche des ersten oder zweiten Flanschsegments schneidet dabei die Außenfläche.

Es sei darauf hingewiesen, dass die Merkmale der Ausführungsbeispiele der Verbindungsanordnung auch für Ausführungsformen des Luftfahrzeugs und des Verfahrens gelten und umgekehrt.

### KURZE BESCHREIBUNG DER ZEICHNUNGEN

Nachfolgend wird anhand der beigefügten Zeichnungen näher auf Ausführungsbeispiele der Erfindung eingegangen.
- Fig. 1: zeigt ein Beispiel einer Verbindungsanordnung zum Verbinden von Strukturteilen eines Luftfahrzeugs in einem schematischen Querschnitt.
- Fig. 2: zeigt ein weiteres Beispiel einer Verbindungsanordnung zum Verbinden von Strukturteilen eines Luftfahrzeugs in einem schematischen Querschnitt.
- Fig. 3: zeigt ein Beispiel einer Verbindungsanordnung schematisch in einer seitlichen Draufsicht.
- Fig. 4: zeigt ein Beispiel einer Verbindungsanordnung schematisch in einer seitlichen Draufsicht.
- Fig. 5: zeigt ein Beispiel eines Luftfahrzeugs in einem Querschnitt.
- Fig. 6: zeigt in einem Beispiel Schritte eines Verfahrens zum Verbinden von Strukturteilen eines Luftfahrzeugs.

### DETAILLIERTE BESCHREIBUNG VON AUSFÜHRUNGSFORMEN

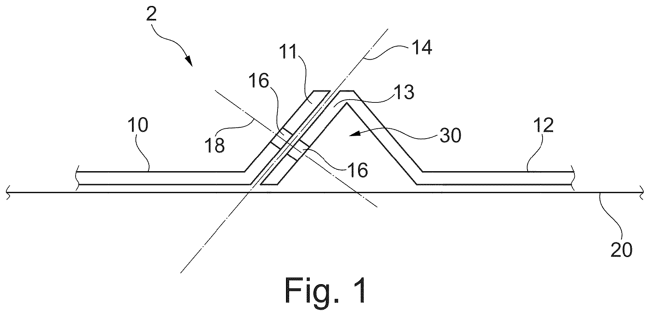

Fig. 1 zeigt ein Beispiel einer Verbindungsanordnung 2 zum Verbinden von Strukturteilen eines Luftfahrzeugs in einem schematischen Querschnitt. Gezeigt ist ein erstes Strukturteil 10 und ein zweites Strukturteil 12, die zusammen einen Teil einer Außenfläche eines Luftfahrzeugs bilden. Das erste Strukturteil 10 weist ein erstes Flanschsegment 11 auf, das in Bezug auf eine von der Außenfläche gebildeten Mantellinie 20 schräg angeordnet ist. Das zweite Strukturteil 12 weist ein zweites Flanschsegment 13 auf, das in Bezug auf die von der Außenfläche gebildete Mantellinie 20 ebenfalls schräg angeordnet ist. Die beiden Strukturteile 10, 12 liegen mit ihren Flanschsegmenten 11, 13 entlang einer Verbindungsebene 14 aneinander an und werden so global miteinander ausgerichtet. Die Flanschsegmente 11, 13 haben jeweils Durchgangsöffnungen 16, die zueinander zeigen und durch welche ein Verbindungselement einer Verbindungsvorrichtung geführt werden kann, um das erste Flanschsegment 11 mit dem zweiten Flanschsegment 13 zu verbinden. Eine gedachte Linie zwischen den beiden Durchgangsöffnungen 16 hindurch bildet eine Verbindungsrichtung 18, die hier quasi senkrecht zur Verbindungsebene 14 verläuft und eine von der Außenfläche gebildete Mantellinie 20 schneidet. Im dargestellten Querschnitt ist unterhalb des zweiten Flanschsegments 13 des zweiten Strukturteils 12 eine dreiecksförmige Tasche 30 zu sehen, die sich bei der in diesem Beispiel gezeigten Ausgestaltung des zweiten Strukturelements 12 ergibt. Ein in die Tasche 30 ragendes Verbindungselement (hier nicht gezeigt) ist damit von der Außenseite, beispielsweise für das Verbinden oder Auseinandernehmen der Strukturteile, gut zugänglich.

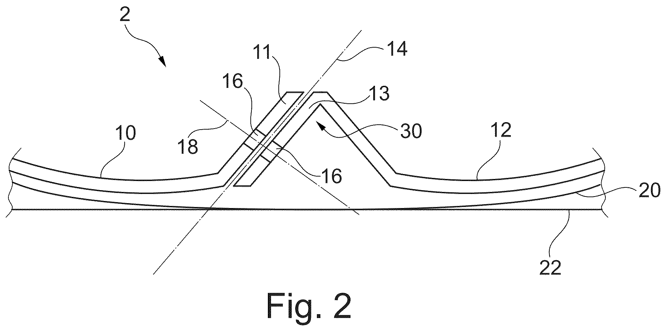

Fig. 2 zeigt ein weiteres Beispiel einer Verbindungsanordnung 2 zum Verbinden von Strukturteilen eines Luftfahrzeugs in einem schematischen Querschnitt. Die Anordnung entspricht im Wesentlichen der in Fig.1 gezeigten Verbindungsanordnung 2 bestehend aus einem ersten Strukturteil 10, einem zweiten Strukturteil 12 und deren jeweils schräg in Bezug auf eine von der Außenfläche gebildeten Mantellinie 20 angeordneten Flanschsegmente 11, 13. Im hier gezeigten Beispiel ist die entlang der Außenfläche verlaufende Mantellinie 20 gekrümmt, weil die Strukturelemente 10, 12 Strukturelemente einer Rumpfsektion eines Luftfahrzeugs sind und der Rumpf eines Luftfahrzeugs in der Regel keine ebene Außenfläche aufweist. Die Verbindungsrichtung 18 als gedachte Linie durch die Durchgangsöffnungen 16 hindurch schneidet sowohl die gekrümmte Mantellinie 20 als auch eine Tangente 22 der gekrümmten Mantellinie 20.

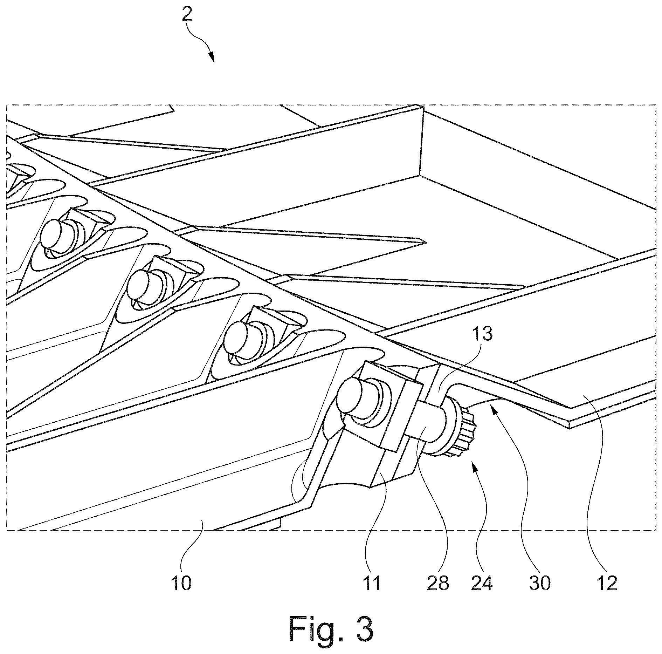

Fig. 3 zeigt ein Beispiel einer Verbindungsanordnung 2 schematisch in einer seitlichen Ansicht von links oben. Zu sehen ist ein erstes Strukturteil 10 mit einem schräg angeordneten ersten Flanschsegment 11. Das Flanschsegment 11 ist mit einem zweiten schräg angeordneten Flanschsegment 13 des zweiten Strukturteils 12 über die mehreren Verbindungsvorrichtungen 24, die entlang den Flanschsegmenten 11, 13 angeordnet sind, fest verbunden. Die Verbindungsvorrichtungen 24 umfassen jeweils Verbindungselemente 28, die hier eine Vierkantmutter auf der einen Seite und eine Schraube auf der anderen, in die Tasche 30 ragenden Seite, aufweisen. In dem Flanschsegment 11 des ersten Strukturteils 10 sind Aussparungen vorgesehen, in denen sich die Durchgangsöffnungen 16 befinden, durch die die Verbindungselemente 28 der Verbindungsvorrichtungen 24 in die dreiecksförmigen Taschen 30 hindurchragen. Im gezeigten Beispiel sind die Vierkantmuttern, die ein Gegenstück zu den Schrauben an den Verbindungselementen 28 bilden, in den Aussparungen so angeordnet, dass sie sich nicht drehen können.

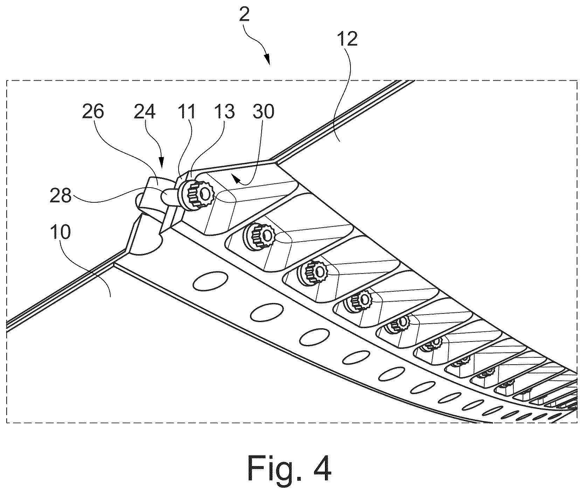

Fig. 4 zeigt ein Beispiel einer Verbindungsanordnung 2 schematisch in einer seitlichen Ansicht von rechts unten. Die Verbindungsanordnung 2 entspricht im Wesentlichen der in Fig. 3 gezeigten Anordnung mit einem ersten Strukturteil 10 und einem zweiten Strukturteil 12. Zu sehen sind die Taschen 30, in die die Verbindungselemente 28 der Verbindungsvorrichtungen 24 ragen. Eine Zylindermutter 26 befindet sich jeweils auf der der Tasche 30 abgewandten Seite als Gegenstück zu den Schrauben.

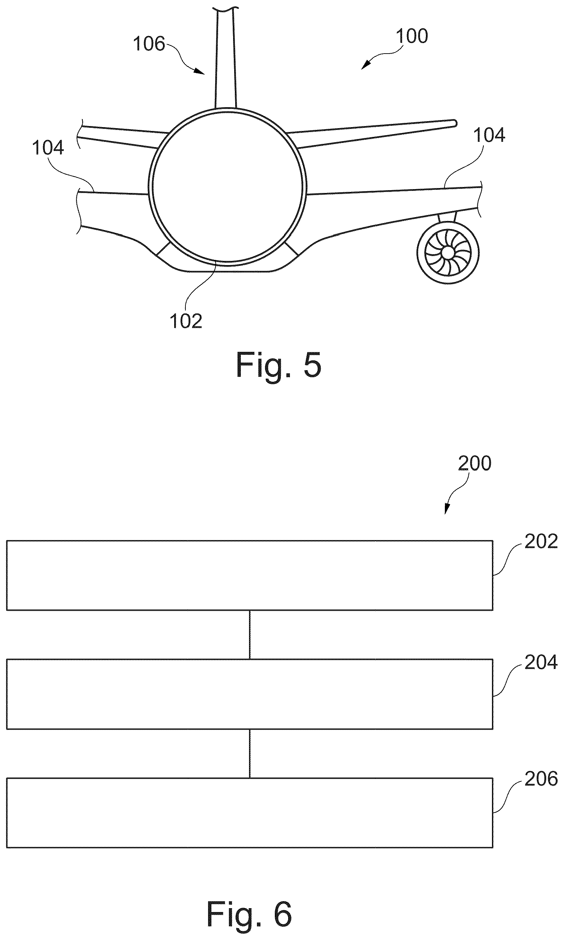

Fig. 5 zeigt ein Beispiel eines Luftfahrzeugs 100 in einem Querschnitt. Das Luftfahrzeug hat einen Rumpf 102, ein Fahrwerk, Tragflächen 104 und Leitwerke 106; wobei mindestens zwei Strukturteile des Luftfahrzeugs 100 mit einer oben beschriebenen Verbindungsanordnung 2 verbunden sind.

Fig. 6 zeigt in einem Beispiel Schritte eines Verfahrens 200 zum Verbinden von Strukturteilen eines Luftfahrzeugs. In einem ersten Schritt 202 wird ein erstes Strukturteil mit einem ersten Flanschsegment bereitgestellt. In einem zweiten Schritt 204 wird ein zweites Strukturteil mit einem zweiten Flanschsegment bereitgestellt. In einem dritten Schritt 206 wird eine Verbindungsvorrichtung zum Verbinden des ersten Flanschsegments und des zweiten Flanschsegments bereitgestellt. Das erste Strukturteil und das zweite Strukturteil bilden eine Außenfläche des Luftfahrzeugs, das erste Flanschsegment und das zweite Flanschsegment liegen in einem verbundenen Zustand entlang einer Verbindungsebene aneinander an, und das erste Flanschsegment und das zweite Flanschsegment weisen jeweils mindestens eine Durchgangsöffnung auf, die zueinander ausgerichtet sind; wobei in verbundenem Zustand ein Verbindungselement der Verbindungsvorrichtung in einer Verbindungsrichtung durch die Durchgangsöffnungen ragt, um das erste Flanschsegment und das zweite Flanschsegment miteinander zu verbinden; wobei die Verbindungsrichtung quer zur Verbindungsebene verläuft und wobei die Verbindungsebene zur Außenfläche derart geneigt angeordnet ist, dass die Verbindungsrichtung schräg zur Außenfläche verläuft und diese schneidet.

Die oben beschriebenen Ausführungsbeispiele können in unterschiedlicher Art und Weise kombiniert werden. Insbesondere können auch Aspekte der Anordnungen für die Ausführungsformen des Verfahrens verwendet werden und umgekehrt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Eine Verbindungsanordnung (2) zum Verbinden von Strukturteilen eines Luftfahrzeugs, die Verbindungsanordnung (2) aufweisend:
- ein erstes Strukturteil (10) mit einem ersten Flanschsegment (11);
- ein zweites Strukturteil (12) mit einem zweiten Flanschsegment (13); und
- eine Verbindungsvorrichtung (24) zum Verbinden des ersten Flanschsegments (11) und des zweiten Flanschsegments (13);
wobei das erste Strukturteil (10) und das zweite Strukturteil (12) eine Außenfläche des Luftfahrzeugs bilden;
wobei das erste Flanschsegment (11) und das zweite Flanschsegment (13) in einem verbundenen Zustand entlang einer Verbindungsebene (14) aneinander anliegen;
wobei das erste Flanschsegment (11) und das zweite Flanschsegment (13) jeweils mindestens eine Durchgangsöffnung (16) aufweisen, die zueinander ausgerichtet sind; wobei in verbundenem Zustand ein Verbindungselement (28) der Verbindungsvorrichtung (24) in einer Verbindungsrichtung (18) durch die Durchgangsöffnungen (16) ragt, um das erste Flanschsegment (11) und das zweite Flanschsegment (13) miteinander zu verbinden;
wobei die Verbindungsrichtung (18) quer zur Verbindungsebene (14) verläuft; und
wobei die Verbindungsebene (14) zur Außenfläche derart geneigt angeordnet ist, dass die Verbindungsrichtung (18) schräg zur Außenfläche verläuft und diese schneidet.

2. Verbindungsanordnung (2) gemäß Anspruch 1, wobei die Verbindungsrichtung (18) schräg zu einer von der Außenfläche gebildeten Mantellinie verläuft, und die Mantellinie schneidet.

3. Verbindungsanordnung (2) gemäß Anspruch 1, wobei die Verbindungsrichtung (18) schräg zu einer Tangente (22) einer von der Außenfläche gebildeten gekrümmten Mantellinie verläuft, und die Tangente (22) schneidet.

4. Verbindungsanordnung (2) gemäß einem der vorhergehenden Ansprüche, wobei die Verbindungsrichtung (18) senkrecht zur Verbindungsebene (14) verläuft.

5. Verbindungsanordnung (2) gemäß einem der vorhergehenden Ansprüche, wobei die Durchgangsöffnungen (16) eine konische Buchse bilden.

6. Verbindungsanordnung (2) gemäß Anspruch 5, wobei das mindestens eine Verbindungselement (28) ein konischer Bolzen ist.

7. Verbindungsanordnung (2) gemäß einem der vorhergehenden Ansprüche, wobei die Verbindungsanordnung zusätzlich mindestens einen Treibstift umfasst.

8. Verbindungsanordnung (2) gemäß einem der vorhergehenden Ansprüche, wobei die Verbindungsvorrichtung (24) ferner mindestens eine Zylindermutter umfasst.

9. Verbindungsanordnung (2) gemäß einem der vorhergehenden Ansprüche, wobei die Strukturteile (10, 12) Strukturteile einer Rumpfsektion des Luftfahrzeugs sind.

10. Ein Luftfahrzeug (100), aufweisend:
- einen Rumpf (102), ein Fahrwerk, Tragflächen (104) und Leitwerke (106);
wobei mindestens zwei Strukturteile des Luftfahrzeugs mit der Verbindungsanordnung (2) gemäß einem der Ansprüche 1-9 verbunden sind.

11. Ein Verfahren (200) zum Verbinden von Strukturteilen eines Luftfahrzeugs, das die folgenden Schritte aufweist:
- (202) Bereitstellen eines ersten Strukturteils mit einem ersten Flanschsegment;
- (204) Bereitstellen eines zweiten Strukturteils mit einem zweiten Flanschsegment; und
- (206) Bereitstellen einer Verbindungsvorrichtung zum Verbinden des ersten Flanschsegments und des zweiten Flanschsegments;
wobei das erste Strukturteil und das zweite Strukturteil eine Außenfläche des Luftfahrzeugs bilden;
wobei das erste Flanschsegment und das zweite Flanschsegment in einem verbundenen Zustand entlang einer Verbindungsebene aneinander anliegen;
wobei das erste Flanschsegment und das zweite Flanschsegment jeweils mindestens eine Durchgangsöffnung aufweisen, die zueinander ausgerichtet sind; wobei in verbundenem Zustand ein Verbindungselement der Verbindungsvorrichtung in einer Verbindungsrichtung durch die Durchgangsöffnungen ragt, um das erste Flanschsegment und das zweite Flanschsegment miteinander zu verbinden;
wobei die Verbindungsrichtung quer zur Verbindungsebene verläuft; und
wobei die Verbindungsebene zur Außenfläche derart geneigt angeordnet ist, dass die Verbindungsrichtung schräg zur Außenfläche verläuft und diese schneidet.
